# EUROPÄISCHE PATENTSCHRIFT

(11) **EP 2 424 780 B1**
(45) Veröffentlichungstag und Bekanntmachung des Hinweises auf die Patenterteilung: **30.03.2016**
(21) Anmeldenummer: 10719318.7
(22) Anmeldetag: 30.04.2010
(51) Int. Cl.: B64F 5/00, B23P 19/10

(54) **VORRICHTUNG ZUR RÄUMLICHEN AUSRICHTUNG VON MINDESTENS ZWEI UNTERGRUPPENBAUTEILEN SOWIE VERFAHREN**
DEVICE FOR SPATIALLY ORIENTING AT LEAST TWO SUBGROUP COMPONENTS AND METHOD
DISPOSITIF POUR L'ALIGNEMENT SPATIAL D'AU MOINS DEUX SOUS-COMPOSANTS ET PROCÉDÉ CORRESPONDANT

(30) Priorität: 01.05.2009 DE 102009018991; 01.05.2009 US 174502 P
(43) Veröffentlichungstag der Anmeldung: 07.03.2012
(73) Patentinhaber: Airbus Operations GmbH, 21129 Hamburg (DE)
(72) Erfinder: STARK, Ulrich, 22587 Hamburg (DE); SCHRICKEL, Jörg, 21717 Deinste (DE); BRANDT, Wolfgang, 25337 Elmshorn (DE)
(74) Vertreter: Maiwald Patentanwalts GmbH
(86) Internationale Anmeldenummer: PCT/EP2010/055878
(87) Internationale Veröffentlichungsnummer: WO 2010/125172

(56) Entgegenhaltungen:
- EP-A1- 0 641 624
- EP-A1- 0 751 447
- DE-A1-102004 056 286
- DE-A1-102006 019 917
- DE-A1-102007 028 918
- J. Wollnack, P. Stepanek: "Iterativ lernende Verfahren in der Großbauteilmontage", wt Werkstattstechnik online, vol. 10 2004, pages 572-579, Retrieved from the Internet: URL:http://www.tuhh.de/ft2/wo/Paper/Online Paper_10_2004.pdf [retrieved on 2013-01-28]

## Beschreibung

Die Erfindung betrifft eine Vorrichtung zur räumlichen Ausrichtung von mindestens zwei großformatigen Untergruppenbauteilen, insbesondere mindestens einer Seitenschale, mindestens einer Oberschale, mindestens einer Unterschale und/oder mindestens eines Fußbodengerüstes, in Relation zueinander zur Integration eines Bauteils, insbesondere einer Rumpfsektion eines Flugzeugs.

Weiterhin betrifft die Erfindung ein Verfahren zur räumlichen Ausrichtung von mindestens zwei Untergruppenbauteilen.

Im modernen Flugzeugbau werden Rumpfzellen üblicherweise in der so genannten Sektionsmontage gefertigt. Hierbei werden Untergruppenbauteile, wie beispielsweise Seitenschalen, Ober- und Unterschalen sowie Fußbodengerüste und gegebenenfalls weitere Systemkomponenten, wie zum Beispiel technische Ausrüstungssysteme, zu einer Rumpfsektion integriert. Die vollständige Rumpfzelle eines Flugzeugs wird dann aus einer Vielzahl von hintereinander angeordneten Rumpfsektionen gebildet.

Gegenwärtig eingesetzte Produktionsanlagen zur Rumpfzellenfertigung verfügen über Positioniereinrichtungen, unter deren Zuhilfenahme die Untergruppenbauteile aufgenommen und im Raum in Relation zueinander ausgerichtet werden. Die notwendigen Daten für die Ausrichtung werden mittels einer geeigneten Messeinrichtung ermittelt. Die eigentliche Ausrichtung erfolgt dann manuell gesteuert in einem iterativen Prozess. Hierbei müssen jedoch neben der geforderten hohen Passgenauigkeit insbesondere auch die auf die Untergruppenbauteile einwirkenden Kräfte begrenzt werden, um beispielsweise undefinierte Eigenverformungen durch äußere, auf die Untergruppenbauteile einwirkende mechanische Kräfte zu verhindern. Infolge dieser Effekte erhöht sich jedoch die Anzahl der bis zum Erreichen einer vorgegebenen Sollposition zu durchlaufenden iterativen Verfahrprozesse der einzelnen Positioniereinrichtungen. Darüber hinaus wird im Fall einer manuell erfolgenden Positionierung aus Sicherheitsgründen in der Regel immer nur jeweils eine Positioniereinrichtung zur Zeit verfahren. Die vorstehend erwähnten Nachteile bei der bisherigen Verfahrensweise bei der Montage von Rumpfsektionen bzw. bei den hierzu eingesetzten Vorrichtungen führen zu erhöhten Montagezeiten.

In "Iterativ lernende Verfahren in der Großbauteilmontage, J. Wollnack, P. Stepanek, wt Werkstattstechnik online, Jahrgang 94, H. 10, S. 572-579" wird eine automatisierte Montage von Großbauteilen mit Hilfe von neuronalen Netzen zur Bauteilform und -lagekorrektur beschrieben.

Aufgabe der Erfindung ist es, eine Vorrichtung zu schaffen, die es erlaubt eine vorgegebene Soll-Geometrie von Untergruppenbauteilen schnellstmöglich einzustellen und anschließend die Untergruppenbauteile durch bevorzugt einfache Verfahrbewegungen in eine heft- und/oder fügefähige Position zu bringen.

Diese Aufgabe wird durch eine Vorrichtung nach Maßgabe des Patentanspruchs 1 gelöst.

Die Positioniereinrichtungen der Vorrichtung erlauben die bevorzugt automatische Aufnahme und die freie Positionierbarkeit von mindestens zwei Untergruppenbauteilen, wie zum Beispiel Seitenschalen, einer Ober- und einer Unterschale und mindestens eines Fußbodengerüstes, im dreidimensionalen Raum. Hierbei ist zu berücksichtigen, dass die großformatigen Untergruppenbauteile nach ihrer Aufnahme durch die Positioniereinrichtungen bzw. die daran befindlichen Halteeinrichtungen aufgrund ihrer Eigenflexibilität zunächst in eine vorgegebene, exakt definierte Soll-Geometrie gebracht werden müssen. Erst nach dem Erreichen dieser Soll-Geometrie können die Untergruppenbauteile beispielsweise durch Verfahrbewegungen der Positioniereinrichtungen in eine heft- und fügefähige Position gebracht werden. Die sich bei den Untergruppenbauteilen nach der Aufnahme in den Positioniereinrichtungen zunächst einstellende Geometrie ist nur durch die Anwendung komplexer, nicht linearer mathematischer Algorithmen beschreibbar.

Die Vorrichtung ist zu diesem Zweck mit mindestens einem neuronalen Netz ausgestattet, das zur Einstellung einer konstruktiv vorgegebenen Soll-Geometrie der mindestens zwei Untergruppenbauteile durch zeitgleiches Verfahren der Positioniereinrichtungen dient. Infolge der zeitgleich erfolgenden und vom neuronalen Netz überwachten Verfahrbewegungen der Positioniereinrichtungen kann der bis zum Erreichen der Soll-Geometrie benötigte Zeitaufwand signifikant verringert werden.

Zur Kontrolle der Verfahrbewegungen der Positioniereinrichtungen ist darüber hinaus mindestens eine Steuer- und/oder Regeleinrichtung erforderlich, die beispielsweise mit einer bekannten CNC-Steuerung realisiert sein kann. Nachdem die Untergruppenbauteile mittels des neuronalen Netzes in die vorgesehene Soll-Geometrie gebracht wurden, können die Untergruppenbauteile kontrolliert von der CNC-Steuerung beispielsweise durch einfache Verfahrbewegungen in eine heft- und fügefähige Raumposition gebracht werden. Dadurch, dass die Untergruppenbauteile mittels des neuronalen Netzes zunächst in eine vorgegebene Soll-Geometrie gebracht werden, verringert sich der regelungstechnische und/oder der steuerungstechnische Aufwand, der zur Kontrolle der Verfahrbewegungen der Untergruppenbauteile bis zum Erreichen eines heft- und/oder fügefähigen Zustandes erforderlich ist, erheblich.

Nach Maßgabe einer vorteilhaften Ausgestaltung der Vorrichtung ist mittels der mindestens einen Messeinrichtung eine räumliche Lage der Untergruppenbauteile und/oder der Positioniereinrichtungen erfassbar.

Hierdurch ist eine hochpräzise Ausrichtung der zusammen zu fügenden Untergruppenbauteile möglich. Der Positionierungsvorgang wird hierbei ständig von der mindestens einen Steuer- und/oder Regeleinrichtung und/oder von dem mindestens einen neuronalen Netz kontrolliert.

Nach einer Weiterbildung der Vorrichtung ist vorgesehen, dass die mindestens eine Messeinrichtung mindestens einen Lasertracker und/oder mindestens ein photogrammetrisches System aufweist.

Hierdurch ist eine berührungslose Erfassung der jeweiligen räumlichen Position der Untergruppenbauteile mit einer zugleich hohen Genauigkeit von besser als 0,1 mm innerhalb der Vorrichtung möglich. Bei der Erfassung der räumlichen Positionsdaten der Untergruppenbauteile mittels eines Lasertrackers werden die Untergruppenbauteile vorzugsweise mit jeweils mindestens sechs Reflexionsmarken ausgestattet. Im Falle eines auf photogrammetrischen Methoden basierenden Messsystems sind solche zusätzlichen Markierungen nicht zwingend erforderlich, können jedoch durch eine hierdurch bewirkte Kontrastverbesserung des auszuwertenden Bildes zu einer Beschleunigung des Messvorgangs und/oder zu einer Verbesserung der Messgenauigkeit beitragen. Alternativ kann auch ein lasergestütztes GPS-System, das für die Innenraumanwendung geeignet ist und das ein Referenzlasergitter im Raum generiert, als Messeinrichtung Verwendung finden (so genanntes "Indoor-GPS^{®}").

Eine Weiterbildung der Vorrichtung sieht vor, dass das neuronale Netz hardwarebasiert und/oder softwarebasiert, insbesondere innerhalb der mindestens einen Steuer- und/oder Regeleinrichtung, ausgeführt ist.

Die hardwarebasierte Realisation des neuronalen Netzes weist vor allem Geschwindigkeitsvorteile auf, bedingt jedoch einen deutlich höheren Systemaufwand. Eine softwarebasierte Lösung lässt sich hingegen unmittelbar in eine im Allgemeinen zur Ansteuerung der Positioniereinrichtungen ohnehin erforderliche CNC-Steuerung bzw. eine hierzu bereits vorhandene Rechnereinheit softwaremäßig integrieren.

Gemäß einer weiteren Ausgestaltung der Erfindung werden die von der mindestens einen Messeinrichtung erfassten Positionsdaten der Untergruppenbauteile der Steuer- und/oder Regeleinrichtung sowie dem neuronalen Netz zugeführt.

Diese Rückführung der von der Messeinrichtung erfassten Raumkoordinaten in das mindestens eine neuronale Netz sowie auf die Steuer- und/oder Regeleinrichtung ist zur Herstellung eines in sich geschlossenen (zurückgekoppelten) Steuer- und/oder Regelkreises erforderlich. Hierdurch können die Steuer- und/oder Regeleinrichtung sowie das neuronale Netz etwaig vorhandene Fehlpositionierungen der Untergruppenbauteile mit geringer Zeitverzögerung erkennen und diesen Abweichungen von einer Soll-Position durch das entsprechende Verfahren der Positioniereinrichtungen entgegenwirken.

Nach einer vorteilhaften Weiterbildung der Vorrichtung sind die Positioniereinrichtungen jeweils mit mindestens einer Halteeinrichtung zur Aufnahme und Freigabe mindestens eines Untergruppenbauteils ausgestattet, wobei die mindestens eine Halteeinrichtung mittels der Steuer- und/oder Regeleinrichtung kontrollierbar ist.

Hierdurch wird das vollautomatische Aufnehmen sowie das gegebenenfalls selbsttätige Ablegen von Untergruppenbauteilen mittels der Positioniereinrichtungen ermöglicht. Die Halteeinrichtungen können beispielsweise mit Saugnäpfen oder unter Verwendung von in kalottenförmigen Aufnahmen spielfrei einbringbaren Kugelköpfen realisiert werden.

Eine weitere vorteilhafte Ausgestaltung der Vorrichtung sieht vor, dass die Positioniereinrichtungen ergänzend mittels einer Handsteuerung kontrollierbar sind.

Hierdurch werden dem Bedienpersonal im Fehlerfall zusätzliche Eingriffsmöglichkeiten gegeben. Darüber hinaus ermöglicht die Handsteuerung gegebenenfalls eine zusätzliche manuelle Präzisionskorrektur der vom neuronalen Netz bereits eingestellten Soll-Geometrie der Untergruppenbauteile. Die Handsteuerung, zum Beispiel in der Form eines "Joysticks", gibt elektrische Signale ab, die unmittelbar an die zugehörigen Aktuatoren der Positioniereinrichtungen geleitet werden. Die Handsteuerungssignale haben Priorität vor etwaigen Signalen des neuronalen Netzes und der Steuer- und/oder Regeleinrichtung. Alternativ oder ergänzend können Positionierhilfen, wie zum Beispiel Laser-Linien oder dergleichen, vorgesehen sein, um die Genauigkeit der visuellen Überwachung durch einen Bediener zu verbessern. Die Handsteuerung ist bevorzugt so ausgelegt, dass jeweils nur eine Positioniereinrichtung mittels mindestens eines Aktuators manuell verfahrbar ist.

Eine Weiterbildung der Vorrichtung sieht vor, dass mindestens eine Hefteinrichtung vorgesehen ist, um die mindestens zwei Untergruppenbauteile in ihrer Relativlage zueinander zu fixieren.

Hierdurch erübrigt sich eine Verbringung der ordnungsgemäß zueinander ausgerichteten Untergruppenbauteile in eine separate, das heißt räumlich getrennte Heft- und/oder Fügestation, die zu unkontrollierten Lageveränderungen und hierdurch bedingten Maßabweichungen bzw. Verschiebungen führen könnte.

Nach Maßgabe einer vorteilhaften Weiterbildung der Vorrichtung ist mindestens eine Fügeeinrichtung vorgesehen, um die mindestens zwei Untergruppenbauteile zusammenzufügen.

Hierdurch können mindestens zwei Untergruppenbauteile nach dem initialen 3D-Geometriekorrekturprozess und der erfolgten Ausrichtung sowie der optionalen Heftung zu einem Bauteil zusammen gefügt werden.

Gemäß einer Fortbildung der Vorrichtung ist im Bereich der mindestens einen Positioniereinrichtung mindestens ein Messaufnehmer zur Ermittlung weiterer Messdaten angeordnet, der mit der mindestens einen Steuer- und/oder Regeleinrichtung und dem mindestens einen neuronalen Netz verbunden ist.

Dies ermöglicht eine direkte Erfassung von Messdaten im Bereich der Positioniereinrichtungen, wie zum Beispiel eine unmittelbare Weg- und/oder Kraftmessung an den Positioniereinrichtungen.

Im Fall einer weiteren vorteilhaften Ausführungsvariante der Vorrichtung ist der mindestens eine Messaufnehmer ein Kraftaufnehmer, insbesondere zur Erfassung von Deformationen der Untergruppenbauteile, ein Wegaufnehmer, insbesondere zur Erfassung von Positionsdaten der Positioniereinrichtungen, ein Drehwinkelaufnehmer, ein Geschwindigkeitsaufnehmer, ein Beschleunigungsaufnehmer, ein Temperaturaufnehmer und/oder Luftfeuchteaufnehmer.

Hierdurch können neben den vorrangig von der Messeinrichtung berührungslos ermittelten Positionsdaten der Untergruppenbauteile bzw. der Positioniereinrichtungen eine Vielzahl von weiteren physikalischen Messgrößen direkt an den Positioniereinrichtungen, insbesondere jedoch die exakten Positionskoordinaten der Positioniereinrichtungen, erfasst werden, um die Steuerung der Positioniereinrichtungen durch das neuronale Netz und/oder die Steuer- und/oder Regeleinrichtung weiter zu optimieren. Insbesondere bei Wegaufnehmern kann eine direkte mechanische Kopplung zwischen der zu überwachenden Positioniereinrichtung und dem Messaufnehmer bestehen.

Darüber hinaus wird die erfindungsgemäße Aufgabe durch ein Verfahren gemäß Patentanspruch 12 gelöst, das die folgenden Verfahrensschritte umfasst:
a) Einbringen eines Untergruppenbauteils in jeweils eine der mindestens zwei Positioniereinrichtungen, insbesondere in mindestens einen Seitenschalenpositionierer, mindestens einen Oberschalenpositionierer und/oder mindestens einen Unterschalenpositionierer,
b) simultanes Verfahren der Positioniereinrichtungen unter der ausschließlichen Kontrolle mindestens eines neuronalen Netzes und mindestens einer Messeinrichtung, bis eine vorgegebene Soll-Geometrie erreicht ist,
c) Erfassen von Positionsdaten der mindestens zwei Untergruppenbauteile und/oder der Positioniereinrichtungen mittels der Messeinrichtung zur Ermittlung einer Ist-Position, und
d) Ausrichten der Untergruppenbauteile alleinig kontrolliert von der mindestens einen Steuer- und/oder Regeleinrichtung durch simultanes Verfahren der Positioniereinrichtungen aufgrund einer von der Messeinrichtung und/oder von Messaufnehmern jeweils erfassten Ist-Position, bis eine insbesondere zum Heften und/oder Fügen der Untergruppenbauteile geeignete Soll-Position erreicht ist.

Im Verfahrensschritt a) wird zunächst jeweils ein Untergruppenbauteil von jeweils einer Positioniereinrichtung aufgenommen bzw. in diese eingebracht oder eingesetzt. Zur Aufnahme der Untergruppenbauteile verfügt jede Positioniereinrichtung über mindestens eine, vorzugsweise jedoch mindestens zwei spielfreie Halteeinrichtungen bzw. Anbindungsorgane. Die Halteeinrichtungen sind endseitig an Haltearmen der Positionierer angeordnet und können zum Beispiel als Kugelköpfe ausgeführt sein, die zumindest bereichsweise formschlüssig in Kugelpfannen einbringbar sind. Alternativ können, insbesondere bei Untergruppenbauteilen mit glatten Oberflächen, auch Saugnäpfe Verwendung finden. Die Halteeinrichtungen sind bevorzugt von der zentralen Steuer- und/oder Regeleinrichtung betätigbar und vom betreffenden Untergruppenbauteil wieder lösbar. Im Verfahrensschritt b) werden die Positioniereinrichtungen mit den daran aufgenommenen Untergruppenbauteilen kontrolliert von mindestens einem neuronalen Netz solange simultan verfahren, bis eine auf der Grundlage von CAD-Bauteildaten vorgegebene Soll-Geometrie der Untergruppenbauteile erreicht ist. Hierdurch können anfängliche undefinierte Verformungen der in den Positioniereinrichtungen aufgenommenen Untergruppenbauteile, wie beispielsweise massebedingte Eigendeformationen im Fall von großformatigen Untergruppenbauteilen, temperaturbedingte Längenänderungen und/oder herstellungsbedingte Maßabweichungen im Bereich der Positioniereinrichtungen, vor dem Beginn des Ausrichtprozesses beseitigt werden. Im Idealfall entspricht die nach dem Verfahrensschritt b) erreichte Soll-Geometrie der Untergruppenbauteile der in den CAD-Bauteildaten vordefinierten Gestalt. Darüber hinaus vereinfacht sich hierdurch der notwendige Steuerungs- und/oder Regelungsaufwand zur Überwachung der Verfahrbewegungen der Positioniereinrichtungen, insbesondere bis zum Erreichen einer heft- und/oder fügefähigen Stellung der Untergruppenbauteile.

Um die zur Erreichung der Soll-Geometrie notwendigen Verformungen der Untergruppenbauteile zu bewirken, ist in aller Regel die Einleitung von mechanischen Kräften in die Untergruppenbauteile erforderlich. Die Größe dieser von den Positioniereinrichtungen aufzubringenden mechanischen Kräfte wird insbesondere von den im Bereich der Positioniereinrichtungen vorgesehenen Messaufnehmern, die unter anderem als Kraftaufnehmer ausgestaltet sind, im Zuge einer "Kraftüberwachung" ständig ermittelt und an das neuronale Netz und/oder die Steuer- und/oder Regeleinrichtung zur weiteren Auswertung weitergeleitet. Durch eine entsprechende Ansteuerung der Aktuatoren innerhalb der Positioniereinrichtungen, in den Haltearmen und in den Halteeinrichtungen bzw. Anbindungsorganen kann dann die Einleitung von unzulässig hohen mechanischen Kräften in die zu fügenden Untergruppenbauteile verhindert werden, so dass bleibende strukturelle Schäden an den zu fügenden Bauteilen und unerlaubt hohe Spannungen in den ausgerichteten Untergruppenbauteilen ausgeschlossen sind. Hinsichtlich der einzuleitenden Kräfte ist im Allgemeinen ein maximaler Grenzwert gegeben, bei dessen Überschreitung jede weitere Geometrieänderung des Untergruppenbauteils durch das Verfahren der Positioniereinrichtungen unterbleibt, um eine dauerhafte Beschädigung des Untergruppenbauteils und/oder der beteiligten Positioniereinrichtungen und Halteeinrichtungen zu verhindern.

Zur Ermittlung der jeweils aktuellen Ist-Geometrie eines jeden Untergruppenbauteils dient vorzugsweise eine berührungslose Messeinrichtung, zum Beispiel in der Form eines Laser-Trackers, eines "Indoor-GPS" oder einer photogrammetrischen Einrichtung. Im Fall eines Laser-Trackers sind über die Untergruppenbauteile eine Vielzahl von Laserreflektoren hinweg verteilt angeordnet, die eine exakte Erfassung der jeweiligen Ist-Oberflächengeometrie des betreffenden Untergruppenbauteils erlauben. Die Messeinrichtung kann in den nachfolgenden Verfahrensschritten auch zur Erfassung der Raumposition der Untergruppenbauteile und/oder der Positioniereinrichtungen unabhängig von etwaigen Messaufnehmern, insbesondere Wegaufnehmern im Bereich der Positioniereinrichtungen, dienen.

Nach dem die mindestens zwei Untergruppenbauteile im Verfahrensschritt b) auf eine vorgegebene Soll-Geometrie gebracht wurden, werden im Verfahrensschritt c) die Positionsdaten der mindestens zwei Untergruppenbauteile und/oder der Positioniereinrichtungen mittels der mindestens einen Messeinrichtung zur Ermittlung einer jeweils aktuellen Ist-Position der Untergruppenbauteile und/oder der Positioniereinrichtungen ermittelt.

Im Verfahrensschritt d) erfolgt dann das Ausrichten der Untergruppenbauteile kontrolliert von der mindestens einen Steuer- und/oder Regeleinrichtung durch simultanes Verfahren der Positioniereinrichtungen auf der Grundlage der von der Messeinrichtung und/oder von den Messaufnehmern erfassten Positionsdaten, bis insbesondere eine zum Heften und/oder Fügen der Untergruppenbauteile geeignete Soll-Position erreicht ist. Nach dem Erreichen der vorgegebenen Soll-Position können die ausgerichteten Untergruppenbauteile zur Lagesicherung geheftet und gegebenenfalls auch endgültig mittels geeigneter Einrichtungen gefügt werden. Die Positionsüberwachung kann alternativ oder ergänzend auch durch in den Positioniereinrichtungen vorgesehene Wegaufnehmer erfolgen. Infolge der kontinuierlichen Übermittlung der von der mindestens einen Messeinrichtung und/oder von den Messaufnehmern erfassten Raumkoordinaten an die den Ausrichtprozess kontrollierende Steuer- und/oder Regeleinrichtung und/oder das neuronale Netz, ist ein schneller und präziser Ausrichtvorgang erreichbar.

Die Erfassung der Positionsdaten der Untergruppenbauteile und/oder der Positioniereinrichtungen kann mit der Messeinrichtung, wie vorstehend bereits kurz erwähnt wurde, mit Lasertrackern, mit photogrammetrischen Systemen und/oder mit einem Indoor-GPS erfolgen, wodurch im Allgemeinen eine Messunsicherheit von weniger als 0,1 mm erreichbar ist. Der Einsatz eines Lasertrackers erfordert in jedem Fall die Anbringung von so genannten Marken an den interessierenden, verformungsrelevanten Referenzpunkten des betreffenden Untergruppenbauteils und/oder an den Positioniereinrichtungen, wenn zugleich auch deren Bewegungen mit dem Lasertracker erfasst werden sollen.

Als Messaufnehmer im Bereich der Positioniereinrichtungen können zum Beispiel inkremental oder absolut arbeitende lineare Wegaufnehmer und/oder Drehwinkelgeber eingesetzt werden. Geeignete, das heißt störsichere, verschleißarme und wartungsfreie Wegaufnehmer arbeiten beispielsweise auf induktiver oder optischer Basis. Neben den Wegaufnehmern sind in den Positioniereinrichtungen bevorzugt zumindest Kraftaufnehmer integriert, um die während der Verfahrprozesse der Positioniereinrichtungen auf die Untergruppenbauteile einwirkenden Kräfte und die hierdurch in der Regel resultierenden Deformationen der Untergruppenbauteile erfassen und minimieren zu können. Darüber hinaus können die Positioniereinrichtungen, die Haltearme und/oder die Halteeinrichtungen bzw. die Anbindungsorgane mit Drehwinkelaufnehmern, mit Geschwindigkeitsaufnehmern, mit Beschleunigungsaufnehmern, mit Temperaturaufnehmern, mit Feuchteaufnehmern und dergleichen ausgestattet sein.

Den Temperatursensoren kommt Bedeutung beim Ausgleich von temperaturbedingten Dimensionsänderungen der in der Regel großformatigen Untergruppenbauteile einschließlich der Positioniereinrichtungen zu. Aufgrund der bekannten Temperaturen können die Verfahrbewegungen der Positioniereinrichtungen kompensiert und darüber hinaus auch die zum Aufnehmen der Untergruppenbauteile an den Positioniereinrichtungen erforderlichen Halteeinrichtungen entsprechend nachjustiert werden, um mechanische Spannungen in den Untergruppenbauteilen zu verhindern und unter allen denkbaren Umweltbedingungen eine hoch präzise Ausrichtung zu gewährleisten. Neben dem Einfluss der Temperatur können weitere Störgrößen existieren, die die Genauigkeit des Verfahrens in relevanter Größenordnung beeinflussen.

Der Lasertracker, die Wegaufnehmer, die Kraftaufnehmer und alle weiteren optionalen Messaufnehmer liefern die Positionsdaten bzw. die anderen physikalischen Messdaten bevorzugt unmittelbar in digitaler Form, so dass die entsprechenden Daten störsicher an die Steuer- und/oder Regeleinrichtung und das neuronale Netz geleitet und dort schnell weiter verarbeitet werden können.

Die Steuer- und/oder Regeleinrichtung kann beispielsweise mit einer bekannten CNC-Steuerung mittels eines Standard-PC-Clusters und/oder mindestens einem Prozessrechner realisiert sein, der vorzugsweise über eine direkte Zugriffsmöglichkeit auf die CAD-Konstruktionsdaten der auszurichtenden Untergruppenbauteile verfügt. Das mindestens eine neuronale Netz kann ausschließlich hardwarebasiert und/oder softwarebasiert auf mindestens einem Standard-Industrie-PC oder einem leistungsfähigen Cluster aus Standard-Industrie-PCs umgesetzt sein.

Nach einer weiteren Fortentwicklung des Verfahrens wird das neuronale Netz in einer Versuchsphase solange trainiert, bis eine hinreichende Aussagerichtigkeit erreicht und hieraus ein Initialdatensatz für einen ersten Verfahrensdurchlauf mit dem neuronalen Netz erzeugt ist.

Der sich ergebende Initialdatensatz dient als erste Grundlage für alle späteren Verfahrensdurchläufe und muss für andersartige Untergruppenbauteile erneut durchlaufen werden.

Der Initialdatensatz innerhalb des neuronalen Netzes wird mit jedem weiteren Verfahrensdurchlauf infolge der auf das neuronale Netz zurückgeführten aktuellen Positionsdaten sowie der weiteren physikalischen Messdaten der Positioniereinrichtungen und der Untergruppenbauteile stetig verbessert, so dass eine hochpräzise Ausrichtung der Untergruppenbauteile in Relation zueinander in kürzester Zeit ohne äußere manuelle Eingriffe möglich ist. Das Anlernen erfolgt unter Verwendung der im späteren Verfahren in eine vorgegebene Soll-Geometrie zu bringenden und anschließend zueinander auszurichtenden realen Untergruppenbauteile einschließlich der hierfür erforderlichen Positioniereinrichtungen. Mittels einer Handsteuerung sind während der Versuchsphase manuelle Korrekturen zur Verbesserung des Lerneffektes des neuronalen Netzes möglich.

Der Begriff der Aussagerichtigkeit des neuronalen Netzes meint im Kontext der vorliegenden Beschreibung die nach dem Abschluss der Anlernphase erreichte Anfangsgenauigkeit in Bezug auf die Einhaltung der konstruktiv vorgegebenen Soll-Geometrie der Untergruppenbauteile bzw. die Ausrichtung der Untergruppenbauteile in Relation zueinander innerhalb der Vorrichtung.

Die Steuer- und/oder Regeleinrichtung wird hingegen mittels bekannter Verfahren analytisch vorprogrammiert. Diese Programmierung kann beispielsweise durch das so genannte "Teach In"-Verfahren oder rein numerisch aufgrund vorgegebener CAD-Koordinaten der Untergruppenbauteile und/oder der Positioniereinrichtungen vollzogen werden.

Eine weitere vorteilhafte Ausgestaltung des Verfahrens sieht vor, dass der Initialdatensatz während des Verfahrvorganges, insbesondere durch eine kontinuierliche Einspeisung der von der mindestens einen Messeinrichtung ermittelten Positionsdaten und/oder den von dem mindestens einen Messaufnehmer ermittelten Messdaten in das mindestens eine neuronale Netz, sukzessive verbessert wird.

Durch die Wirkung der ständigen Rückkopplung der Positionsdaten bzw. der von den übrigen Messaufnehmern ermittelten Messdaten in das neuronale Netz wird praktisch die Anlernphase in den normalen Betrieb des neuronalen Netzes hinein verlängert, wodurch die Positioniergenauigkeit stetig erhöht und zugleich die hierfür erforderliche Zeit solange verringert wird, bis ein Optimum erreicht ist.

In der Zeichnung zeigt:
- **Fig. 1**: Eine prinzipielle Darstellung einer Vorrichtung, und
- **Fig. 2**: eine schematische Darstellung eines in der Vorrichtung bevorzugt Verwendung findenden neuronalen Netzes.

In der Zeichnung weisen dieselben konstruktiven Elemente jeweils die gleiche Bezugsziffer auf.

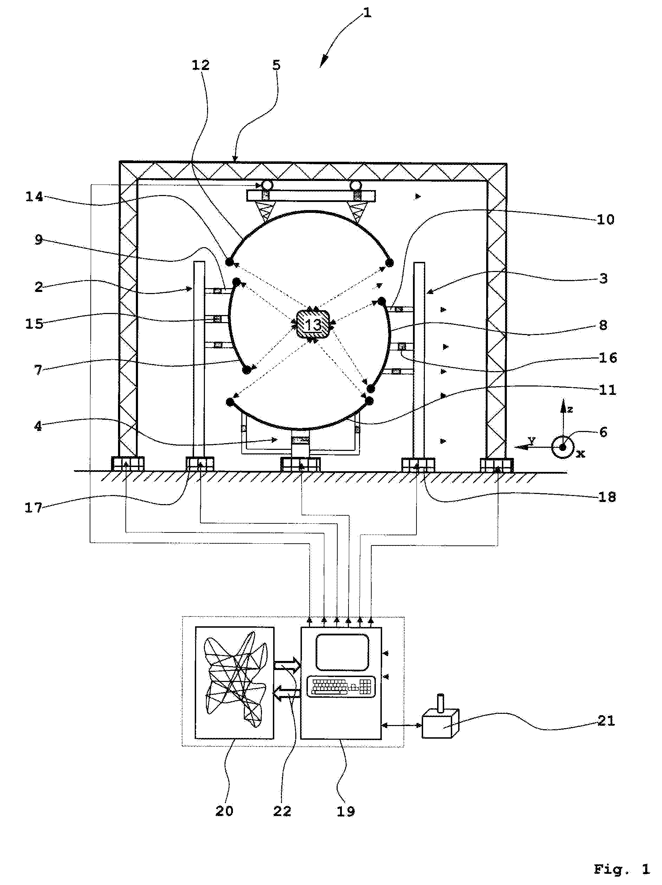

Die **Fig. 1** zeigt eine schematische Darstellung der erfindungsgemäßen Vorrichtung.

Eine Vorrichtung 1 umfasst unter anderem zwei Seitenschalenpositionierer 2,3, einen Unterschalenpositionierer 4 und einen Oberschalenpositionierer 5. Weiterhin ist mindestens eine weitere Positioniereinrichtung, die beispielsweise als ein Präsentierrahmen ausgestaltet sein kann, zur Ausrichtung mindestens eines in Fig. 1 nicht dargestellten Fußbodengerüstes vorgesehen. Darüber hinaus sind zwei beidseitig vom Oberschalenpositionierer 5 angeordnete, der besseren zeichnerischen Übersicht halber gleichfalls nicht eingezeichnete Arbeitsplattformen bzw. Arbeitsbühnen vorgesehen, um manuelle Eingriffe durch das Bedienpersonal zu ermöglichen. Ein Koordinatensystem 6 veranschaulicht die Lage sämtlicher in Fig. 1 gezeigter Komponenten im Raum. Aufgrund der Größe der von den Positionierern 2 bis 5 aufzunehmenden Untergruppenbauteile ist in einer bevorzugten Ausführungsvariante der Vorrichtung 1 hinter jedem der Positionierer jeweils mindestens ein weiterer Positionierer in Verlaufsrichtung der x-Achse versetzt angeordnet.

An den beiden Seitenschalenpositionierern 2,3 ist jeweils eine Seitenschale 7,8 durch nicht dargestellte Halteeinrichtungen bzw. Anbindungsorgane aufgenommen, die endseitig an jeweils drei Haltearmen der Seitenschalenpositionierer 2,3 vorgesehen sind. Stellvertretend für alle weiteren Haltearme sind die oberen Haltearme der Seitenschalenpositionierer 2,3 mit den Bezugsziffern 9,10 versehen.

Entsprechend ist eine Unterschale 11 an dem Unterschalenpositionierer 4 durch drei gleichfalls nicht bezeichnete Haltearme über daran endseitig angeordnete Halteeinrichtungen angebunden und eine Oberschale 12 hängt am Oberschalenpositionierer 5 - getragen von zwei verstrebten Haltearmen mit jeweils einer endseitigen Halteeinrichtung - von oben herab in die Vorrichtung 1 hinein. Die Positioniereinrichtungen 2 bis 5 einschließlich der optionalen Arbeitsplattformen und des Präsentierrahmens lassen sich, wie durch das Koordinatensystem 6 angedeutet, zumindest parallel zur x-Achse, der y-Achse sowie der z-Achse frei verfahren. Vorzugsweise verfügt jedoch jede der Positioniereinrichtungen über mehr als drei unabhängige Freiheitsgrade.

Die beiden Seitenschalenpositionierer 2,3 sind zumindest parallel zur x-Achse verschiebbar ausgeführt, während die Haltearme der Seitenschalenpositionierer 2,3 zumindest parallel zur y-Achse und zur z-Achse verfahrbar sind. Der Oberschalenpositionierer 5 erlaubt im Zusammenwirken mit den zwei gitterartig verstrebten Haltearmen eine Positionierung der Oberschale 12 im Raum zumindest parallel zu den drei Achsen des Koordinatensystems 6. Alternativ sind auch rotatorische Bewegungsabläufe, gegebenenfalls auch in Kombination mit translatorischen Bewegungen möglich.

Dasselbe gilt für die Bewegungsmöglichkeiten der Unterschale 11 sowie für die nicht dargestellte Positioniereinrichtung zur Manipulation der räumlichen Lage des nicht eingezeichneten Fußbodengerüstes. Über die vorstehend genannten rein translatorischen Bewegungsoptionen der Positioniereinrichtungen parallel zu den Achsen des kartesischen Koordinatensystems 6 hinaus, die jeweils für drei Freiheitsgrade hinsichtlich jeder Positioniereinrichtung stehen, können die Positioniereinrichtungen über weitere Freiheitsgrade, beispielsweise weitere drei rotatorische Bewegungsoptionen pro Positioniereinrichtung verfügen. Hierdurch können die Untergruppenbauteile in der Vorrichtung 1 auf komplexeren, das heißt insbesondere auf beliebig gekrümmten Bewegungsbahnen verfahren bzw. positioniert werden, wodurch die Ausrichtung im Raum beschleunigt wird. Abgesehen von den vorstehend geschilderten Bewegungsmöglichkeiten der Positioniereinrichtungen und der daran angeordneten Haltearme können auch die Halteeinrichtungen bzw. die Anbindungsorgane selbst über mehrere Freiheitsgrade zur Verbesserung der Positioniermöglichkeiten der Untergruppenbauteile verfügen.

Die beiden Seitenschalen 7,8, die Unterschale 11, die Oberschale 12 sowie das nicht eingezeichnete Fußbodengerüst sollen mittels der Vorrichtung 1 letztendlich so zueinander ausgerichtet werden, dass diese Untergruppenbauteile eine vorgegebene Soll-Position einnehmen, in der zumindest eine provisorische Heftung oder das endgültige Fügen zu einer kompletten Rumpfsektion eines Flugzeugs möglich ist.

Zur Erfassung der jeweils aktuellen Positionsdaten der Seitenschalen 7,8, der Unterschale 11 sowie der Oberschale 12 mittels eines Lasertrackers 13, sind an die Schalen 7,8,11,12 vor allem im Bereich von eigenverformungsrelevanten Referenzpunkten eine Vielzahl von Reflektoren als Markierungen angeordnet, von denen ein Reflektor 14 stellvertretend für alle übrigen mit einer Bezugsziffer versehen ist. Die vom Lasertracker 13 emittierten und von den Reflektoren zurückgeworfenen Laserimpulse bzw. Laserstrahlen sind jeweils durch gestrichelt dargestellte Doppelpfeile veranschaulicht. Durch den Lasertracker 13 lassen sich die exakten Positionen der Untergruppenbauteile in der Vorrichtung und damit gegebenenfalls in indirekter Weise auch die Koordinaten der Positioniereinrichtungen selbst bis auf wenige Zehntel Millimeter genau bestimmen. Anstelle oder ergänzend zum Lasertracker 11 kann beispielsweise auch eine Messeinrichtung Verwendung finden, die auf einem photogrammetrischen System basiert.

Ferner ist in die beiden Seitenschalenpositionierer 2,3, den Oberschalenpositionierer 5, den Unterschalenpositionierer 4 sowie in den Fußbodengerüstpositionierer eine Vielzahl von Messaufnehmern integriert. Von diesen sind die in den Seitenschalenpositionierern 2,3 befindlichen Messaufnehmer exemplarisch für alle übrigen mit den Bezugsziffern 15,16 versehen. Bei den Messaufnehmern handelt es sich beispielsweise um Kraftaufnehmer, mit denen die auf die Untergruppenbauteile jeweils einwirkenden mechanischen Kräfte differenziert erfassbar sind. Diese Kräfte können durch die Verfahrbewegungen der Positionierer und/oder durch das Eigengewicht der auszurichtenden Untergruppenbauteile sowie hierdurch induzierte Eigenverformungen hervorgerufen werden. Zusätzlich zu den Kraftaufnehmern können weitere Messaufnehmer, beispielsweise Wegaufnehmer, Geschwindigkeitsaufnehmer, Beschleunigungsaufnehmer sowie Drehwinkelaufnehmer integriert sein. Darüber hinaus können Temperaturaufnehmer und Luftfeuchteaufnehmer vorgesehen sein, um insbesondere thermisch bedingte Geometrieänderungen der Untergruppenbauteile und/oder der Positioniereinrichtungen zu erfassen und gegebenenfalls kompensieren zu können.

Hierüber hinaus gehend verfügt jede Positioniereinrichtung über mindestens einen Aktuator bzw. einen elektrischen oder hydraulischen Antrieb zum beliebigen Verfahren der Positioniereinrichtungen im Raum. Stellvertretend für alle übrigen Aktuatoren tragen zwei Aktuatoren in den beiden Seitenschalenpositionierern 2,3 die Bezugsziffern 17,18. Die Aktuatoren in den Positioniereinrichtungen erlauben bevorzugt eine spielfreie und hochpräzise Bewegung der Positioniereinrichtungen innerhalb der Vorrichtung in mindestens drei Freiheitsgraden. Die Aktuatoren können beispielsweise hydraulisch, pneumatisch und/oder elektrisch realisiert sein. Vorzugsweise kommen jedoch elektrisch angetriebene Präzisionsspindelantriebe zum Einsatz.

Darüber hinaus verfügt die Vorrichtung über mindestens eine Steuer- und/oder Regeleinrichtung 19 sowie erfindungsgemäß über mindestens ein, der Steuer- und/oder Regeleinrichtung 19 nebengeordnetes, neuronales Netz 20. Diese stehen zum Datenaustausch über einen bidirektionalen Datenbus 22 in ständiger Verbindung. Der Datenbus 22 ermöglicht einen vollständigen Informationsaustausch zwischen der Steuer- und/oder Regeleinrichtung 19 sowie dem neuronalen Netz 20. Dies bedeutet, dass die Untergruppenbauteile sowohl von der Steuer- und/oder Regeleinrichtung 19 als auch vom neuronalen Netz 20 mittels der Aktuatoren frei im Raum bewegbar sind. Zugleich stehen auch sämtliche vom Lasertracker 13 ermittelten Positionsdaten der Untergruppenbauteile einschließlich der von den Messaufnehmern in den Positionierern und den Halteeinrichtungen ermittelten weiteren physikalischen Messdaten sowohl der Steuer- und/oder Regeleinrichtung 19 als auch dem neuronalen Netz 20 zur Weiterverarbeitung zur Verfügung.

Sämtliche vom Lasertracker 13 ermittelten Positionsdaten der Untergruppenbauteile einschließlich der von den Messaufnehmern ermittelten weiteren physikalischen Messdaten, wie zum Beispiel Kraftmesswerte, Geschwindigkeitswerte, Beschleunigungswerte und/oder Drehwinkelwerte der Positioniereinrichtungen bzw. der Untergruppenbauteile, werden - wie durch Linien angedeutet - an die Steuer- und/oder Regeleinrichtung 19 weitergeleitet und damit zugleich auch dem neuronalen Netz 20 verfügbar gemacht. Umgekehrt empfangen sämtliche Aktuatoren der Positioniereinrichtungen wahlweise von der Steuer- und/oder Regeleinrichtung 19 und/oder dem neuronalen Netz 20 eine Vielzahl von Ansteuerungssignalen, die in der Darstellung der Fig. 1 durch Pfeile veranschaulicht sind.

Somit ist die Steuer- und/oder Regeleinrichtung 19 jederzeit in der Lage, sämtliche Positioniereinrichtungen innerhalb der Vorrichtung 1 frei im Raum kontrolliert zu verfahren bzw. auszurichten.

Zur Ergänzung der Steuer- und/oder Regeleinrichtung 19 sowie des neuronalen Netzes 20 ist ferner eine Handsteuerung 21 vorgesehen, die es einem Benutzer erlaubt, manuell in an sich vollautomatisch ablaufende Positioniervorgänge innerhalb der Vorrichtung 1 einzugreifen. Ein Doppelpfeil zwischen der Handsteuerung und der Steuer- und/oder Regeleinrichtung 19 verdeutlicht eine optionale Rückwirkung der Steuer- und/oder Regeleinrichtung 19 bzw. des neuronalen Netzes 20 auf die Handsteuerung 21. Hierdurch kann einem Benutzer, beispielsweise für den Fall, dass eine Positioniereinrichtung mit einem darin aufgenommenen Untergruppenbauteil gegen ein Hindernis und/oder ein weiteres Untergruppenbauteil fährt und/oder einer zu hohen mechanischen Belastung ausgesetzt ist, eine haptisch erfahrbare Rückmeldung gegeben werden, so dass zum Beispiel Positionierfehler frühzeitig auch ohne einen visuellen Kontakt bemerkbar gemacht werden können. Eine haptische Rückmeldung auf einen Bediener kann beispielsweise durch mechanische Vibrationen, deren Frequenz und/oder Stärke beispielsweise proportional zu einer mechanisch auf die Positioniereinrichtungen im Fehlerfall einwirkenden Kraft sind, erzeugt werden. Alternativ kann eine Betätigungskraft der Handsteuerung definiert gestuft gesteigert werden.

Grundsätzlich haben die Signale der Handsteuerung 21 Priorität gegenüber den vom neuronalen Netz 20 und/oder von der Steuer- und/oder Regeleinrichtung 19 an die Aktuatoren der Positionierer übermittelten Ansteuerungssignale. Die Handsteuerung 21 ist hierbei aus Sicherheitsgründen so ausgelegt, dass ein Benutzer bevorzugt jeweils nur eine Positioniereinrichtung zur Zeit mittels mindestens eines darin befindlichen und von der Handsteuerung 21 angesprochenen Aktuators im Raum verfahren kann. Das Verfahren der Positioniereinrichtungen im Handsteuerungsmodus erfolgt in der Regel aufgrund einer visuellen Überwachung durch den Bediener. Sämtliche mittels der Handsteuerung 21 vorgenommenen Positionsänderungen der Untergruppenbauteile und der Positionierer bzw. durch das Verfahren der Positionierer bewirkte Geometrieänderungen der Untergruppenbauteile werden zum Beispiel mittels des Lasertrackers 13 erfasst und an die Steuer- und/oder Regeleinrichtung 19 sowie das neuronale Netz 20 weitergeleitet, damit den genannten Kontrollorganen jederzeit der aktuelle Ist-Zustand der Vorrichtung 1 vorliegt.

Nach dem Aufnehmen der Untergruppenbauteile mittels der Positionierer bzw. der an den Haltearmen der Positionierer vorgesehenen Halteeinrichtungen werden die in der Regel aufgrund ihrer Größe flexiblen Untergruppenbauteile durch entsprechendes Verfahren der Positionierer innerhalb der Vorrichtung zunächst in die konstruktiv vorgesehene Soll-Geometrie gebracht. Da die Verformung der Untergruppenbauteile äußerst komplexen, nicht linearen mathematischen Regeln gehorcht, werden die Positionierer in dieser Phase ausschließlich vom neuronalen Netz 19 kontrolliert. Hierbei erfolgt mittels der Messaufnehmer eine stetige Kontrolle der auf die Untergruppenbauteile einwirkenden mechanischen Lasten und Verfahrwege, die vorgegebene Grenzwerte nicht überschreiten dürfen, um eine irreversible Deformation zu verhindern. Die Kraftmessung erfolgt hierbei an einer Vielzahl von verschiedenen hierfür repräsentativen Messpunkten, bevorzugt im Bereich der Haltearme bzw. der Halteeinrichtungen der Positioniereinrichtungen.

Nachdem die Untergruppenbauteile ihre jeweils konstruktiv vorgesehene Soll-Geometrie (3D-Geometrie) erreicht haben, erfolgt unter alleiniger Kontrolle der Steuer- und/oder Regeleinrichtung 19 das Verfahren der Untergruppenbauteile durch die Positionierer bis zum Erreichen einer für den Heft- und/oder Fügeprozess vorgesehenen Soll-Position. Nachdem die Untergruppenbauteile mittels des neuronalen Netzes 20 in die Soll-Geometrie gebracht wurden, sind zum Erreichen einer füge- und/oder heftfähigen Position der Untergruppenbauteile synchron vollzogene, lineare Verfahrbewegungen der Positioniereinrichtungen ausreichend, wodurch sich der Steuer- und/oder Regelungsaufwand signifikant verringert. Die Steuer- und Regeleinrichtung 19 ist im Allgemeinen zur Überwachung derartiger linearer Verfahrbewegungen der nach dem Erreichen der Soll-Geometrie als (fiktiv) starr anzusehenden Untergruppenbauteile prädestiniert.

Daneben können innerhalb der Vorrichtung 1 gleichfalls nicht dargestellte, vorzugsweise vollautomatisch arbeitende Hefteinrichtungen vorgesehen sein, die mittels der Steuer- und/oder Regeleinrichtung 19 sowie dem neuronalen Netz 20 ansteuerbar sind. Sobald die Untergruppenbauteile die für den jeweiligen Heftprozess vorgesehene Soll-Position erreicht haben, kann mittels einer Hefteinrichtung das provisorische Fügen (Heftung) der genannten Komponenten erfolgen. Diese Lagefixierung kann beispielsweise durch Heftniete, Permanentmagnete und/oder Elektromagnete erfolgen.

In einer weiteren Ausbaustufe kann die Vorrichtung 1 zur Erhöhung des Automatisierungsgrades auch mit nicht dargestellten Fügeeinrichtungen ausgestattet sein. Durch die zusätzliche Integration von Heft- und Fügeeinrichtungen kann mittels der Vorrichtung 1 eine vollständige Rumpfsektion für ein Flugzeug aus den Untergruppenbauteilen vollautomatisch hergestellt werden.

Im Weiteren soll der Ablauf des erfindungsgemäßen Verfahrens näher erläutert werden.

Zunächst werden die Untergruppenbauteile in Form der beiden Seitenschalen 7,8, der Unterschale 11, der Oberschale 12 sowie des nicht dargestellten mindestens einen Fußbodengerüstes mittels der Haltearme und den daran endseitig befindlichen Halteeinrichtungen, die an den Seitenschalenpositionierern 2,3, dem Unterschalenpositionierer 4, dem Oberschalenpositionierer 5 sowie dem Präsentierrahmen bzw. dem Fußbodengerüst-Positionierer jeweils vorgesehen sind, aufgenommen und in ihrer Lage fixiert.

Im Anschluss daran werden die Positionierer kontrolliert vom neuronalen Netz solange verfahren, bis jedes Untergruppenbauteil eine den CAD-Konstruktionsdaten entsprechende geometrische Gestalt hat. In diesem Zustand können die Untergruppenbauteile als näherungsweise starre Komponenten angesehen werden, die mittels translatorischer, linearer Verfahrbewegungen der Positioniereinrichtung mit geringem steuerungs- und/oder regelungstechnischen Aufwand in eine heft- und/oder fügefähige Position in Relation zueinander verfahren werden können.

Hiernach werden die Untergruppenbauteile solange verfahren, bis eine Heft- und Fügeposition erreicht ist. Zur Kontrolle dieses Verfahrvorgangs ist die Steuer- und Regeleinrichtung 19 ausreichend, da hierbei in der Regel nur noch lineare, das heißt translatorische Verfahrbewegungen notwendig sind.

Bevor das neuronale Netz 20 zur Steuerung und/oder Regelung der Abläufe innerhalb der Vorrichtung 1 einsatzfähig ist, muss eine umfangreiche Lernphase bzw. Versuchsphase durchlaufen werden. Hierfür werden in die Positionierer dieselben Untergruppenbauteile aufgenommen, die später im regulären Verfahrensablauf mittels des neuronalen Netzes 20 positioniert werden sollen. Nach erfolgter Aufnahme der Untergruppenbauteile durch die Positioniereinrichtungen werden diese kontrolliert vom neuronalen Netz 19 solange verfahren, bis die vorgegebene Soll-Geometrie des Untergruppenbauteils erreicht ist oder mindestens zwei Untergruppenbauteile in eine heft- oder fügefähige Position in Relation zueinander verbracht sind. Hierbei werden die vom Lasertracker 13 ermittelten Positionsdaten der Untergruppenbauteile sowie die von den Messaufnehmern aufgenommenen weiteren physikalischen Daten ständig in das neuronale Netz eingekoppelt, um in diesem iterativen "Trial- and Error-Prozess" die Steuerungs- und/oder Regelungseigenschaften des neuronalen Netzes 20 sukzessive in Richtung einer schnellstmöglichen und zugleich hochgenauen Ausrichtung der Untergruppenbauteile zu optimieren. Im Gegensatz zur Steuer- und Regeleinrichtung "programmiert" bzw. organisiert sich das neuronale Netz 20 durch die vorstehend angedeuteten Prozesse während der Versuchs- bzw. der Anlernphase letztendlich selbsttätig.

Gegebenenfalls müssen mittels der Handsteuerung 21 in dieser Versuchs- bzw. Anlernphase des neuronalen Netzes 20 noch manuelle Korrekturen vorgenommen werden.

Nach dem Abschluss dieser Versuchs- bzw. Anlernphase ist im neuronalen Netz 20 ein initialer Datensatz erzeugt worden. Dieser Datensatz bildet die Basis für alle späteren Ausrichtprozesse von Untergruppenbauteilen desselben Typs.

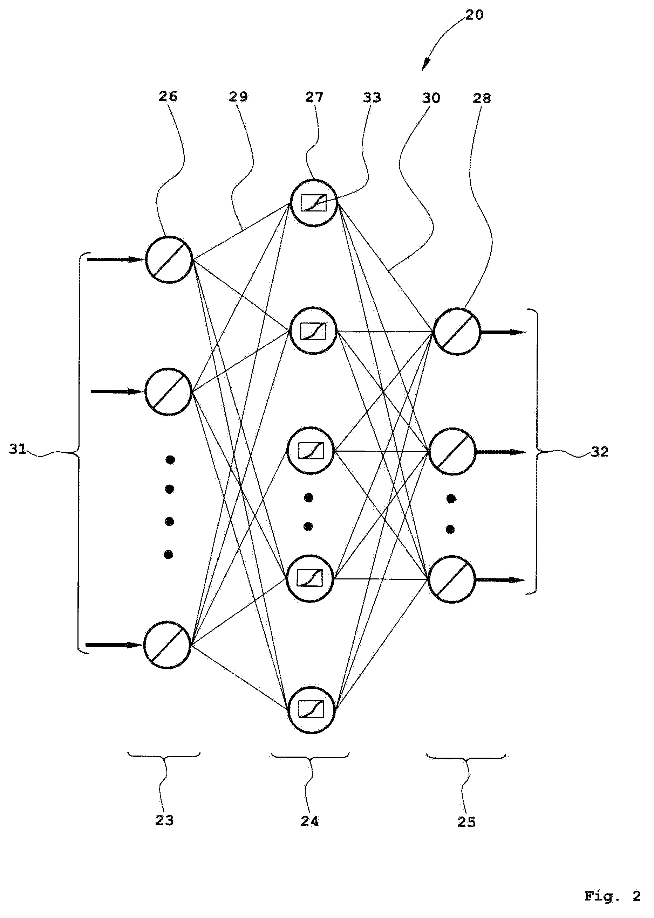

Die **Fig. 2** illustriert in einer exemplarischen Prinzipdarstellung den möglichen Aufbau des neuronalen Netzes.

Das neuronale Netz 20 umfasst eine Eingabeschicht 23, eine verborgene Schicht 24 sowie eine Ausgabeschicht 25, die jeweils mit einer Vielzahl von Neuronen aufgebaut sind, von denen jeweils ein oberes Neuron 26 bis 28 stellvertretend für alle übrigen eine Bezugsziffer trägt. Zwischen den Neuronen existiert jeweils eine Vielzahl von gewichteten Verbindungen, von denen lediglich zwei Verbindungen 29,30 repräsentativ für die restlichen mit einer Bezugsziffer versehen sind. An der Eingabeschicht 23 anliegende Eingangssignale 31 werden mittels des neuronalen Netzes 20 in Ausgangssignale 32 transformiert, die an der Ausgabeschicht 25 anstehen und zur weiteren Verarbeitung abgegriffen werden können.

Anhand einer Gewichtung eines Produktes der gewichteten Verbindungen und einer Aktivierung der in der verborgenen Schicht 24 enthaltenen Neuronen leiten sich aus den Eingangssignalen 31 die Ausgangssignale 32 aufgrund von aufwändigen mathematischen Funktionen ab, wobei eine dieser mathematischen Funktionen repräsentativ für die restlichen die Bezugsziffer 33 trägt.

Bei den Eingangssignalen 31 in das neuronale Netz 20 handelt es sich um beliebige physikalische Messdaten, bevorzugt jedoch um die Positionsdaten der Positioniereinrichtungen und/oder der zugehörigen Untergruppenbauteile innerhalb der Vorrichtung sowie Messwerte der auf die genannten Komponenten einwirkenden mechanischen Lasten bzw. Kräfte. Darüber hinaus können auch Geschwindigkeitswerte und/oder Beschleunigungswerte der genannten Komponenten als Eingangssignale 31 in das neuronale Netz 20 eingespeist bzw. eingekoppelt werden. Die an der Ausgabeschicht 25 anstehenden Ausgangssignale 32 können - nach einer gegebenenfalls noch erforderlichen messtechnischen Anpassung - insbesondere zur Ansteuerung der Aktuatoren herangezogen werden, die zum Verfahren der Positioniereinrichtungen notwendig sind.

### Bezugszeichenliste

- 1: Vorrichtung
- 2: Seitenschalenpositionierer
- 3: Seitenschalenpositionierer
- 4: Unterschalenpositionierer
- 5: Oberschalenpositionierer
- 6: Koordinatensystem
- 7: Seitenschale
- 8: Seitenschale
- 9: Haltearm
- 10: Haltearm
- 11: Unterschale
- 12: Oberschale
- 13: Lasertracker
- 14: Reflektor (Markierung)
- 15: Messaufnehmer (Seitenschalenpositionierer)
- 16: Messaufnehmer (Seitenschalenpositionierer)
- 17: Aktuator (Seitenschalenpositionierer)
- 18: Aktuator (Seitenschalenpositionierer)
- 19: Steuer- und/oder Regeleinrichtung
- 20: neuronales Netz
- 21: Handsteuerung
- 22: Datenbus
- 23: Eingabeschicht
- 24: verborgene Schicht
- 25: Ausgabeschicht
- 26: Neuron
- 27: Neuron
- 28: Neuron
- 29: Verbindung
- 30: Verbindung
- 31: Eingangssignale
- 32: Ausgangssignale
- 33: Funktion

## Patentansprüche

1. Vorrichtung (1) zur räumlichen Ausrichtung von mindestens zwei großformatigen Untergruppenbauteilen, insbesondere mindestens einer Seitenschale (7,8), mindestens einer Oberschale (12), mindestens einer Unterschale (11) und/oder mindestens eines Fußbodengerüstes, in Relation zueinander zur Integration eines Bauteils, insbesondere einer Rumpfsektion eines Flugzeugs, umfassend:
a) mindestens zwei Positioniereinrichtungen zur Aufnahme jeweils eines Untergruppenbauteils, insbesondere mindestens zwei Seitenschalenpositionierer (2,3), mindestens einen Oberschalenpositionierer (5) und/oder mindestens einen Unterschalenpositionierer (4),
b) mindestens eine Messeinrichtung zum Erfassen einer Vielzahl von Messdaten, insbesondere von Positionsdaten der Untergruppenbauteile und/oder der Positioniereinrichtungen,
c) mindestens eine Steuer- und/oder Regeleinrichtung (19), insbesondere mindestens eine CNC-Steuerung, zur alleinigen Kontrolle eines Verfahrens der Untergruppenbauteile durch die Positioniereinrichtungen bis zum Erreichen einer Soll-Position, und
d) mindestens ein neuronales Netz (20) zur ausschließlichen Kontrolle eines Verfahrens der Untergruppenbauteile durch die Positioniereinrichtungen beim Bringen der Unterguppenbauteile in eine Soll-Geometrie.

2. Vorrichtung (1) nach Patentanspruch 1, **dadurch gekennzeich- net, dass** mittels der mindestens einen Messeinrichtung eine räumliche Lage der Untergruppenbauteile und/oder der Positioniereinrichtungen erfassbar ist.

3. Vorrichtung (1) nach Patentanspruch 2, **dadurch gekennzeichnet, dass** die mindestens eine Messeinrichtung mindestens einen Lasertracker (13) und/oder mindestens ein photogrammetrisches System aufweist.

4. Vorrichtung (1) nach einem der Patentansprüche 1 bis 3, **dadurch gekennzeichnet, dass** das neuronale Netz (20) hardwarebasiert und/oder softwarebasiert, insbesondere innerhalb der mindestens einen Steuer- und/oder Regeleinrichtung (19), ausgebildet ist.

5. Vorrichtung (1) nach einem der Patentansprüche 1 bis 4, **dadurch gekennzeichnet, dass** die von der mindestens einen Messeinrichtung erfassten Positionsdaten der Untergruppenbauteile der Steuer- und/oder Regeleinrichtung (19) und dem neuronalen Netz (20) zuführbar sind.

6. Vorrichtung (1) nach einem der Patentansprüche 1 bis 5, **dadurch gekennzeichnet, dass** die Positioniereinrichtungen jeweils mindestens eine Halteeinrichtung zur Aufnahme und Freigabe mindestens eines Untergruppenbauteils aufweisen, wobei die mindestens eine Halteeinrichtung mittels der Steuer- und/oder Regeleinrichtung (19) und/oder dem neuronalen Netz (20) kontrollierbar ist.

7. Vorrichtung (1) nach einem der Patentansprüche 1 bis 6, **dadurch gekennzeichnet, dass** die Positioniereinrichtungen mittels einer Handsteuerung (21) steuerbar sind.

8. Vorrichtung (1) nach einem der Patentansprüche 1 bis 7, **dadurch gekennzeichnet, dass** mindestens eine Hefteinrichtung vorgesehen ist, um die mindestens zwei Untergruppenbauteile in ihrer Relativlage zueinander zu fixieren.

9. Vorrichtung (1) nach einem der Patentansprüche 1 bis 8, **dadurch gekennzeichnet, dass** mindestens eine Fügeeinrichtung vorgesehen ist, um die mindestens zwei Untergruppenbauteile zusammenzufügen.

10. Vorrichtung (1) nach einem der Patentansprüche 1 bis 9, **dadurch gekennzeichnet, dass** im Bereich der mindestens einen Positioniereinrichtung mindestens ein Messaufnehmer zur Ermittlung weiterer Messdaten angeordnet ist, der mit der mindestens einen Steuer- und/oder Regeleinrichtung (19) und dem mindestens einen neuronalen Netz (20) verbunden ist.

11. Vorrichtung (1) nach Patentanspruch 10, **dadurch gekennzeichnet, dass** der mindestens eine Messaufnehmer ein Kraftaufnehmer, insbesondere zur Erfassung von Deformationen der Untergruppenbauteile, ein Wegaufnehmer, insbesondere zur Erfassung von Positionsdaten der Positioniereinrichtungen, ein Drehwinkelaufnehmer, ein Geschwindigkeitsaufnehmer, ein Beschleunigungsaufnehmer, ein Temperaturaufnehmer und/oder ein Luftfeuchteaufnehmer ist.

12. Verfahren zum Ausrichten von mindestens zwei Untergruppenbauteilen in Relation zueinander zur Integration eines Bauteils mit mindestens zwei Positioniereinrichtungen, insbesondere mittels einer Vorrichtung (1) nach Maßgabe eines der Patentansprüche 1 bis 11, umfassend die folgenden Schritte:
a) Einbringen eines Untergruppenbauteils in jeweils eine der mindestens zwei Positioniereinrichtungen, insbesondere in mindestens einen Seitenschalenpositionierer (2,3), mindestens einen Oberschalenpositionierer (5) und/oder mindestens einen Unterschalenpositionierer (4),
b) simultanes Verfahren der Positioniereinrichtungen unter der ausschließlichen Kontrolle mindestens eines neuronalen Netzes (20) und mindestens einer Messeinrichtung bis eine vorgegebene Soll-Geometrie erreicht ist,
c) Erfassen von Positionsdaten der mindestens zwei Untergruppenbauteile und/oder der Positioniereinrichtungen mittels der Messeinrichtung zur Ermittlung einer Ist-Position, und
d) Ausrichten der Untergruppenbauteile alleinig kontrolliert von der mindestens einen Steuer- und/oder Regeleinrichtung durch simultanes Verfahren der Positioniereinrichtungen aufgrund einer von der Messeinrichtung und/oder von Messaufnehmern jeweils erfassten Ist-Position, bis eine insbesondere zum Heften und/oder Fügen der Untergruppenbauteile geeignete Soll-Position erreicht ist.

13. Verfahren nach Patentanspruch 12, **dadurch gekennzeichnet, dass** in einer Versuchsphase das Anlernen des mindestens einen neuronalen Netzes (20) erfolgt, bis das neuronale Netz (20) eine hinreichende Aussagerichtigkeit erreicht und ein Initialdatensatz für ei-nen ersten Verfahrensdurchlauf mit dem neuronalen Netz (20) erzeugt ist.

14. Verfahren nach Patentanspruch 12 oder 13, **dadurch gekennzeichnet, dass** der Initialdatensatz während des Verfahrvorgangs, insbesondere durch eine kontinuierliche Einspeisung der von der mindestens einen Messeinrichtung ermittelten Positionsdaten und/oder den von dem mindestens einen Messaufnehmer ermittelten Messdaten in das mindestens eine neuronale Netz (20), sukzessive verbessert wird.

## Claims

1. Device (1) for spatially aligning at least two large-format subassembly components, in particular at least one side shell (7, 8), at least one upper shell (12), at least one lower shell (11) and/or at least one floor structure, relative to each other for integrating a component, in particular a fuselage section of an aircraft, comprising:
a) at least two positioning devices for taking up in each case a subassembly component, in particular at least two side shell positioners (2, 3), at least one upper shell positioner (5) and/or at least one lower shell positioner (4),
b) at least one measuring device for acquiring a multitude of measured data, in particular of positioning data relating to the subassembly components and/or to the positioning devices,
c) at least one control and/or regulating device (19), in particular at least one CNC control system, for solely controlling a movement of the subassembly components by the positioning devices until a desired position and
d) at least one neuronal network (20) for solely controlling a movement of the subassembly components by the positioning devices during bringing the subassembly components into a desired geometric shape.

2. Device (1) according to claim 1, **characterized in that** by means of the at least one measuring device a spatial position of the large format subassembly components and/or of the positioning devices can be acquired.

3. Device (1) according to claim 2, **characterized in that** the at least one measuring device comprises at least one laser tracker (13) and/or at least one photogrammetric system.

4. Device (1) according to one of the claims 1 to 3, **characterized in that** the neuronal network (20) is designed so as to be hardware-based and/or software-based, in particular within the at least one control and/or regulating device (19).

5. Device (1) according to one of the claims claim 1 to 4, **characterized in that** the positioning data relating to the subassembly components, which positioning data has been acquired by the at least one measuring device, is conveyed to the control and/or regulating device (19) and to the neuronal network (20).

6. Device (1) according to one of the claims 1 to 5, **characterized in that** each of the positioning devices comprises at least one holding device for taking up and releasing at least one subassembly component, wherein the at least one holding device is controllable by means of the control and/or regulating device (19) and/or the neuronal network (20).

7. Device (1) according to one of the claims 1 to 6, **characterized in that** the positioning devices are controllable by means of a manual control device (21).

8. Device (1) according to one of the claims 1 to 7, **characterized in that** at least one tacking device is provided in order to fix the at least two subassembly components in their relative positions to each other.

9. Device (1) according to one of the claims 1 to 8, **characterized in that** at least one joining device is provided in order to join the subassembly components.

10. Device (1) according to one of the claims 1 to 9, **characterized in that** in the region of the at least one positioning device at least one measuring sensor is arranged for determining further measured data, which measuring sensor is connected to the at least one control and/or regulating device (19) and to the at least one neuronal network (20).

11. Device (1) according to claim 10, **characterized in that** the at least one measuring sensor is selected from the group consisting of a force transducer, in particular for acquiring deformation relating to the subassembly components, a displacement transducer, in particular for acquiring positioning data relating to the positioning devices, an angle of rotation transducer, a velocity transducer, an acceleration transducer, a temperature transducer and/or an atmospheric humidity sensor.

12. Method for spatially aligning at least two subassembly components relative to each other for integrating a component with at least two positioning devices, in particular with a device (1) according to one of the claims 1 to 11, comprising the following steps:
a) inserting a subassembly component in each case in one of the at least two positioning devices, in particular in at least one side shell positioner (2, 3), at least one upper shell positioner (5) and/or at least one lower shell positioner (4)
b) simultaneously moving the positioning devices under the solely control of at least one neuronal network (20) and of at least one measuring device until a predetermined desired geometric shape has been attained,
c) acquiring positioning data of the at least two subassembly components and/or of the positioning devices by means of the measuring device to determine an actual position, and
d) aligning the subassembly components in a solely controlled manner by the at least one control and/or regulating device (19) by simultaneously moving the positioning devices based on an actual position in each case acquired by the measuring device and/or by measuring sensors until a desired position has been reached that is, in particular, suitable for tacking and/or joining the subassembly components.

13. Method according to claim 12, **characterized in that** a trial phase teaching of the at least one neuronal network (20) takes place until the neuronal network (20) achieves adequate correctness of its statements and an initial data set for a first method-related procedure with the neuronal network (20) is generated.

14. Method according to claim 12 or 13, **characterized in that** an initial data set during the moving process is improved step by step by, in particular by a continuous feed-in of position data determined by the at least one measuring device and/or by the measured data determined by the at least one measuring sensor into the at least one neuronal network (20).

## Revendications

1. Dispositif (1) destiné à aligner spatialement au moins deux composants d'un sous-groupe ayant de grandes dimensions, en particulier au moins une coque latérale (7, 8), au moins une coque supérieure (12), au moins une coque inférieure (11) et/ou au moins un châssis de plancher, en relation les uns par rapport aux autres pour l'intégration d'un composant, en particulier une section de fuselage d'un avion, comprenant :
a) au moins deux moyens de positionnement destinés à recevoir chacun un composant du sous-groupe, en particulier au moins deux éléments de positionnement de coques latérales (2, 3), au moins un élément de positionnement de coque supérieure (5) et/ou au moins un élément de positionnement de coque inférieure (4),
b) au moins un moyen de mesure destiné à détecter une pluralité de données de mesure, en particulier de données de position des composants du sous-groupe et/ou des moyens de positionnement,
c) au moins un moyen de commande et/ou de réglage (19), en particulier au moins une commande CNC, pour contrôler uniquement un déplacement des composants du sous-groupe par l'intermédiaire des moyens de positionnement jusqu'à l'obtention d'une position théorique, et
d) au moins un réseau neuronal (20) pour contrôler exclusivement un déplacement des composants du sous-groupe par l'intermédiaire des moyens de positionnement lors de l'amenée des composants du sous-groupe dans une géométrie théorique.

2. Dispositif (1) selon la revendication 1, **caractérisé en ce que**, au moyen de l'au moins un moyen de mesure, une position spatiale des composants du sous-groupe et/ou des moyens de positionnement peut être détectée.

3. Dispositif (1) selon la revendication 2, **caractérisé en ce que** l'au moins un moyen de mesure présente au moins un suiveur laser (13) et/ou au moins un système photogrammétrique.

4. Dispositif (1) selon une des revendications 1 à 3, **caractérisé en ce que** le réseau neuronal (20) est basé sur un matériel et/ou sur un logiciel, est réalisé en particulier à l'intérieur de l'au moins un moyen de commande et/ou de réglage (19).

5. Dispositif (1) selon une des revendications 1 à 4, **caractérisé en ce que** les données de position des composants du sous-groupe détectées par l'au moins un moyen de mesure peuvent être acheminées au moyen de commande et/ou de réglage (19) et au réseau neuronal (20).

6. Dispositif (1) selon une des revendications 1 à 5, **caractérisé en ce que** les moyens de positionnement présentent chacun au moins un moyen de retenue destiné à recevoir et à libérer au moins un composant du sous-groupe, l'au moins un moyen de retenue pouvant être contrôlé par l'intermédiaire du moyen de commande et/ou de réglage (19) et/ou du réseau neuronal (20).

7. Dispositif (1) selon une des revendications 1 à 6, **caractérisé en ce que** les moyens de positionnement peuvent être commandés par l'intermédiaire d'une commande manuelle (21).

8. Dispositif (1) selon une des revendications 1 à 7, **caractérisé en ce qu'**au moins un moyen de collage est prévu pour fixer les au moins deux composants du sous-groupe dans leur position relative les uns par rapport aux autres.

9. Dispositif (1) selon une des revendications 1 à 8, **caractérisé en ce qu'**au moins un moyen d'assemblage est prévu pour assembler les au moins deux composants du sous-groupe.

10. Dispositif (1) selon une des revendications 1 à 9, **caractérisé en ce que**, au niveau de l'au moins un moyen de positionnement, au moins un capteur de mesure est disposé pour déterminer d'autres données de mesure et est relié à l'au moins un moyen de commande et/ou de réglage (19) et à l'au moins un réseau neuronal (20).

11. Dispositif (1) selon la revendication 10, **caractérisé en ce que** l'au moins un capteur de mesure est un capteur de force, en particulier pour détecter des déformations des composants du sous-groupe, un capteur de position, en particulier pour détecter des données de position des moyens de positionnement, un capteur de position d'angulaire, un capteur de vitesse, un capteur d'accélération, un capteur de température et/ou un capteur d'humidité de l'air.

12. Procédé destiné à aligner au moins deux composants d'un sous-groupe en relation les uns par rapport aux autres pour l'intégration d'un composant avec au moins deux moyens de positionnement, en particulier au moyen d'un dispositif (1) selon une des revendications 1 à 11, comprenant les étapes suivantes :
a) introduction d'un composant d'un sous-groupe dans chacun des au moins deux moyens de positionnement, en particulier dans au moins un élément de positionnement de coque latérale (2, 3), au moins un élément de positionnement de coque supérieure (5) et/ou au moins un élément de positionnement de coque inférieure (4),
b) déplacement simultané des moyens de positionnement sous le contrôle exclusif d'au moins un réseau neuronal (20) et d'au moins un moyen de mesure jusqu'à ce qu'une géométrie théorique prédéfinie soit obtenue,
c) détection des données de position des au moins deux composants du sous-groupe et/ou des moyens de positionnement par l'intermédiaire du moyen de mesure pour déterminer une position réelle, et
d) alignement des composants du sous-groupe uniquement contrôlé par l'au moins un moyen de commande et/ou de réglage par l'intermédiaire du déplacement simultané des moyens de positionnement suite à une position réelle détectée respectivement par le moyen de mesure et/ou des capteurs de mesure, jusqu'à ce qu'une position théorique appropriée en particulier au collage et/ou à l'assemblage des composants du sous-groupe soit obtenue.

13. Procédé selon la revendication 12, **caractérisé en ce que**, dans une phase d'essai, l'apprentissage de l'au moins un réseau neuronal (20) est effectué jusqu'à ce que le réseau neuronal (20) atteigne une pertinence suffisante et qu'un ensemble de données initiales soit généré avec le réseau neuronal (20) pour un premier passage du procédé.

14. Procédé selon la revendication 12 ou 13, **caractérisé en ce que** l'ensemble de données initiales est améliorée successivement pendant l'opération de déplacement, en particulier par l'intermédiaire d'une alimentation continue des données de position déterminées par l'au moins un moyen de mesure et/ou des données de mesure déterminées par l'au moins un capteur de mesure, dans l'au moins un réseau neuronal (20).
